# EUROPEAN PATENT APPLICATION

(11) **EP 4 509 236 A1**
(43) Date of publication of application: **19.02.2025**
(21) Application number: 22960588.6
(22) Date of filing: 23.11.2022
(51) Int. Cl.: B21B 27/02, B21B 27/06, B21B 38/00, B21B 37/74, B21B 13/02

(54) **ROLLER AND ROLLING DEVICE**

(30) Priority: 27.09.2022 CN 202211177781
(71) Applicant: Jiangsu Contemporary Amperex Technology Limited, Changzhou, Jiangsu 213300 (CN)
(72) Inventor: CAO, Haishang, Changzhou, Jiangsu 213300 (CN); XIAO, Yusheng, Changzhou, Jiangsu 213300 (CN); ZHANG, Qi, Changzhou, Jiangsu 213300 (CN); XIE, Yuanyuan, Changzhou, Jiangsu 213300 (CN)
(74) Representative: Herrmann, Uwe
(86) International application number: PCT/CN2022/133803
(87) International publication number: WO 2024/065991

(57) **Abstract**

A roller is configured to roll an electrode plate (200), and the roller includes a rolling portion (10) and a temperature regulating assembly (30). A rolling surface for rolling the electrode plate is formed on an outer surface of the rolling portion, and a mounting hole (11) is provided inside the rolling portion along an axial direction of the rolling portion. The temperature regulating assembly is provided in the mounting hole and configured to exchange heat with the rolling portion. A rolling apparatus (100) has a first roller (1) and a second roller (2). The first roller and the second roller are jointly configured to roll an electrode plate. When the rolling portion is rolling an electrode plate, the temperature regulating assembly regulates a temperature of the rolling portion along the axial direction, so as to adjust the radial deformation of the rolling portion depending on the rules of thermal expansion and contraction. This reduces the overall deformation of the rolling portion and ensures consistent thickness of the rolled electrode plate, thereby guaranteeing the performance of traction batteries produced using the electrode plate.

## Description

### CROSS-REFERENCE TO RELATED APPLICATIONS

This application claims priority to Chinese Patent Application No.20221117781.2, filed on September 27, 2022 and entitled "ROLLER AND ROLLING APPARATUS", which is incorporated herein by reference in its entirety.

### TECHNICAL FIELD

The application relates to the technical field of battery manufacturing equipment, and in particular, to a roller and a rolling apparatus.

### BACKGROUND

Traction batteries are widely used in the field of new energy, such as electric vehicles and new energy vehicles. New energy vehicles and electric vehicles have become a new development trend of the automobile industry. In the production process of traction batteries, electrode plates need to be rolled.

At present, when rolling an electrode plate, a roller is likely to bend and deform in a radial direction, causing an inconsistency between radial dimensions of the roller at different axial positions. As a result, rolled electrode plates have inconsistent thickness, further impairing the performance of traction batteries.

### SUMMARY

In view of defects in the prior art, this application is intended to provide a roller and a rolling apparatus having such roller, so as to effectively solve the problem that a roller is likely to bend and deform in a radial direction during the rolling process.

According to a first aspect of this application, a roller is disclosed. The roller is configured to roll an electrode plate and includes:
a rolling portion, where a rolling surface for rolling an electrode plate is formed on an outer surface of the rolling portion, and a mounting hole is provided inside the rolling portion along an axial direction of the rolling portion; and
a temperature regulating assembly, where the temperature regulating assembly is provided in the mounting hole and configured to exchange heat with the rolling portion.

In the roller according to this application, the temperature regulating assembly is provided in the mounting hole and configured to exchange heat with the rolling portion. When the rolling portion is rolling an electrode plate, the temperature regulating assembly regulates a temperature of the rolling portion along the axial direction, so as to adjust the radial deformation of the rolling portion depending on the rules of thermal expansion and contraction. This reduces the overall deformation of the rolling portion and ensures consistent thickness of the rolled electrode plate, thereby guaranteeing the performance of traction batteries produced using the electrode plate.

In some embodiments of this application, the temperature regulating assembly includes a plurality of temperature regulators, where the plurality of temperature regulators are spaced apart in the mounting hole along the axial direction of the rolling portion and are configured to independently exchange heat with the rolling portion. When radial deformation occurs in the rolling portion pressing an electrode plate, the radial deformation dimension varies at different positions of the rolling surface. Therefore, a plurality of temperature regulators are required for separate temperature regulation, so that the rolling portion has different temperatures along the axial direction. In this case, the radial dimension is basically the same at different positions along an axial direction of the rolling surface, thereby ensuring consistent thickness of the rolled electrode plate.

In some embodiments of this application, the temperature regulator is a heat exchange semiconductor or a heat exchanger having a heat exchange medium. Both the heat exchange semiconductor and the heat exchanger having a heat exchange medium can exchange heat with the rolling portion, so as to regulate the temperature of the rolling portion, thereby adjusting the radial deformation of the rolling portion.

In some embodiments of this application, the temperature regulator is a heat exchange semiconductor, and the roller further includes a conductive assembly, where the conductive assembly includes a first conductor and a second conductor, the first conductor is provided in the mounting hole and is electrically connected to the heat exchange semiconductor, the second conductor is provided outside the mounting hole and is configured to be electrically connected to a power source, and the first conductor and the second conductor are capable of moving relative to each other and are electrically connected. The first conductor and the second conductor are provided to connect an external power source and a heat exchange semiconductor, so as to supply power to the heat exchange semiconductor. In this way, the heat exchange semiconductor exchanges heat with the rolling portion to regulate the temperature of the rolling portion, thereby adjusting the radial deformation of the rolling portion.

In some embodiments of this application, both the first conductor and the second conductor are graphite conductors, and the first conductor and the second conductor are in contact to conduct electricity. The graphite conductors are in contact to conduct electricity, so that electricity can be effectively conducted to the heat exchange semiconductor, thereby controlling the heat exchange semiconductor to exchange heat with the rolling portion. In this way, the temperature of the rolling portion is regulated, thereby adjusting the radial deformation of the rolling portion.

In some embodiments of this application, both the first conductor and the second conductor are magnetic induction coil conductors, and the first conductor and the second conductor are spaced apart and conduct electricity through induction. The magnetic induction coil conductors are provided to conduct electricity through induction, so that electricity can be effectively conducted to the heat exchange semiconductor, thereby controlling the heat exchange semiconductor to exchange heat with the rolling portion. In this way, the temperature of the rolling portion is regulated, thereby adjusting the radial deformation of the rolling portion.

In some embodiments of this application, the heat exchange semiconductor is a cooling semiconductor, or the heat exchange semiconductor is a heating semiconductor. The cooling semiconductor is provided to contract, by cooling, the rolling portion at various positions along the axial direction, so as to suppress the radial deformation of the rolling portion. In this way, the radial dimension is basically the same at various positions along the axial direction of the rolling portion. The heating semiconductor is provided to expand, by heating, the rolling portion at various positions along the axial direction, so as to balance the radial deformations at various positions along the axial direction of the rolling portion. In this way, the radial dimension is basically the same at various positions along the axial direction of the rolling portion.

In some embodiments of this application, the heat exchange semiconductor is a cooling semiconductor, a plurality of such cooling semiconductors are symmetrically arranged with respect to a middle position along the axial direction of the rolling portion, and during operation, cooling powers of the cooling semiconductors gradually decrease in directions from two ends of the axial direction to the middle position of the rolling portion. Due to a counter-acting force of the electrode plate applied to the first roller, it is easy to have a problem that the radial deformation dimension is large at a middle position and small at two end positions along the axial direction of the rolling portion. Therefore, operating powers of the cooling semiconductors at the two end positions are set to be higher than operating power of the cooling semiconductor at the middle position, so that contraction at the two end positions of the rolling portion is greater than that at the middle position. In this way, the radial dimensions at various positions along the axial direction of the rolling portion are adjusted to be basically consistent.

In some embodiments of this application, the heat exchange semiconductor is a heating semiconductor, a plurality of such heating semiconductors are symmetrically arranged with respect to a middle position along the axial direction of the rolling portion, and during operation, heating powers of the heating semiconductors gradually increase in directions from two ends of the axial direction to the middle position of the rolling portion. Due to a counter-acting force of the electrode plate applied to the roller, it is easy to have a problem that the radial deformation dimension is large at a middle position and small at two end positions along the axial direction of the rolling portion. Therefore, operating powers of the heating semiconductors at the two end positions are set to be lower than operating power of the heating semiconductor at the middle position, so that expansion at the two end positions of the rolling portion is smaller than that at the middle position. In this way, the radial dimensions at various positions along the axial direction of the rolling portion are adjusted to be basically consistent.

In some embodiments of this application, the mounting hole is a through hole running through the roller in an axial direction, the through hole is coaxial with the roller, and the first conductor is provided at one end of the through hole facing the second conductor. The first conductor is provided in the mounting hole and coaxial with the roller. When the roller rotates to roll an electrode plate, the first conductor rotates along with the roller in the axial direction. This maintains a rotational position of the first conductor, ensuring that the first conductor and the second conductor keep in contact to conduct electricity at all times.

In some embodiments of this application, the roller further includes an air supply assembly, where the air supply assembly is provided outside the other end of the mounting hole far away from the second conductor and is configured to deliver cooling airflow into the mounting hole. A certain amount of heat will be released during heat exchange between the heat exchange semiconductor and the rolling portion. To prevent the released heat from affecting the heat exchange or damaging a connection line between the heat exchange semiconductor and the first conductor, the air supply assembly is provided to deliver airflow for dissipating the released heat.

In some embodiments of this application, the temperature regulator is a heat exchanger having a heat exchange medium, and the roller further includes a heat exchange tube, where a passage for circulation of the heat exchange medium is formed inside the heat exchange tube, and the passage communicates with the interior of the heat exchanger. The heat exchange tube communicates with the heat exchanger, so that the heat exchange medium in the heat exchanger is replaced. This ensures that the temperature of the heat exchange medium in the heat exchanger is adequate for heat exchange with the rolling portion, thereby regulating the temperature of the rolling portion.

In some embodiments of this application, one end of the heat exchange tube is provided outside the mounting hole, the other end of the heat exchange tube is inserted into the mounting hole and communicates with the heat exchanger, and the heat exchanger is isolated from an inner wall of the mounting hole under the support of the heat exchange tube. The heat exchanger is isolated from an inner wall of the mounting hole under the support of the heat exchange tube, so that the heat exchange tube is suspended in the mounting hole. During rotation of the rolling portion, the heat exchange tube will not rotate along with the rolling portion, thereby ensuring an effective connection between the heat exchanger and the heat exchange tube. In this way, the heat exchange medium in the heat exchanger can be replaced through the heat exchange tube.

In some embodiments of this application, the heat exchanger is a cooling piece having a cooling medium, or the heat exchanger is a heating piece having a heating medium. The cooling piece having a cooling medium is provided to contract, by cooling, the rolling portion at various positions along the axial direction, so as to suppress the radial deformation of the rolling portion. In this way, the radial dimension is basically the same at various positions along the axial direction of the rolling portion. The heating piece having a heating medium is provided to expand, by heating, the rolling portion at various positions along the axial direction, so as to balance the radial deformations at various positions along the axial direction of the rolling portion. In this way, the radial dimension is basically the same at various positions along the axial direction of the rolling portion.

In some embodiments of this application, the heat exchanger is a cooling piece having a cooling medium, a plurality of such cooling pieces are symmetrically arranged with respect to a middle position along the axial direction of the rolling portion, and during operation, cooling powers of the cooling pieces gradually decrease in directions from two ends of the axial direction to the middle position of the rolling portion. Due to a counter-acting force of the electrode plate applied to the roller, it is easy to have a problem that the radial deformation dimension is large at a middle position and small at two end positions along the axial direction of the rolling portion. Therefore, operating powers of the cooling pieces at the two end positions are set to be higher than operating power of the cooling piece at the middle position, so that contraction at the two end positions of the rolling portion is greater than that at the middle position. In this way, the radial dimensions at various positions along the axial direction of the rolling portion are adjusted to be basically consistent.

In some embodiments of this application, the heat exchanger is a heating piece having a heating medium, a plurality of such heating pieces are symmetrically arranged with respect to a middle position along the axial direction of the rolling portion, and during operation, heating powers of the heating pieces gradually increase in directions from two ends of the axial direction to the middle position of the rolling portion. Due to a counter-acting force of the electrode plate applied to the roller, it is easy to have a problem that the radial deformation dimension is large at a middle position and small at two end positions along the axial direction of the rolling portion. Therefore, operating powers of the heating pieces at the two end positions are set to be lower than operating power of the heating piece at the middle position, so that expansion at the two end positions of the rolling portion is smaller than that at the middle position. In this way, the radial dimensions at various positions along the axial direction of the rolling portion are adjusted to be basically consistent.

In some embodiments of this application, the rolling portion includes a plurality of heat conduction portions and a plurality of heat insulation portions alternately arranged in sequence along the axial direction, where the heat conduction portion is fitted and connected to the heat insulation portion, and the plurality of temperature regulators are arranged in a one-to-one correspondence with the plurality of heat conduction portions The plurality of heat conduction portions and the plurality of heat insulation portions are alternately arranged in sequence to divide the rolling portion into sections along the axial direction and no heat is exchanged between the sections, so as to regulate the temperature of each section. In this way, the rolling portion has different temperatures along the axial direction, and the radial dimension is basically the same at different positions along the axial direction of the rolling surface, thereby ensuring consistent thickness of the rolled electrode plate.

In some embodiments of this application, outer surfaces of the plurality of heat conduction portions and outer surfaces of the plurality of heat insulation portions jointly form a rolling surface for rolling the electrode plate, and the rolling surface is cylindrical in a natural state. The cylindrical rolling surface can ensure consistent thickness of the rolled electrode plate.

In some embodiments of this application, the roller further includes a first connecting portion and a second connecting portion, where the first connecting portion and the second connecting portion are connected to two ends of the rolling portion respectively in the axial direction. The first connecting portion and the second connecting portion are provided at two ends along the axial direction of the rolling portion and connected to the rolling portion, so as to support rotation of the rolling portion for rolling electrode plates.

In some embodiments of this application, the roller further includes a first connecting portion and a second connecting portion, and the rolling portion includes an inner cylinder portion and an outer cylinder portion, where the inner cylinder portion, the first connecting portion, and the second connecting portion are integrally formed into a roller shaft, the outer cylinder portion is sleeved outside the inner cylinder portion, and the mounting hole is provided inside the inner cylinder portion along an axial direction of the inner cylinder portion. The inner cylinder portion, the first connecting portion, and the second connecting portion are integrally formed into a roller shaft, and the outer cylinder portion is sleeved outside the inner cylinder portion, so as to facilitate assembly of the roller shaft.

According to a second aspect of this application, a rolling apparatus is proposed. The rolling apparatus has a first roller and a second roller, where the first roller and the second roller are jointly configured to roll an electrode plate, and at least one of the first roller and the second roller is the roller according to any one of the foregoing embodiments.

The foregoing description is merely an overview of the technical solution of this application. For a better understanding of the technical means in this application such that they can be implemented according to the content of the specification, and to make the above and other objectives, features and advantages of this application more obvious and easier to understand, the following describes specific embodiments of this application.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments and are not intended to limit this application. In addition, in all the accompanying drawings, same parts are denoted by same reference signs. In the accompanying drawings:
FIG. 1 is a schematic structural diagram of a rolling apparatus in a front view according to an embodiment of this application;
FIG. 2 is a schematic structural diagram of a rolling apparatus in a side view according to an embodiment of this application;
FIG. 3 is a schematic structural diagram of a first roller in a front view according to an embodiment of this application;
FIG. 4 is a schematic structural diagram of a first roller in a side view according to an embodiment of this application;
Fig. 5 is a schematic structural diagram of a connection between a temperature regulating assembly and a conductive assembly according to an embodiment of this application;
FIG. 6 is a schematic structural diagram of a first roller in a front view according to another embodiment of this application;
FIG. 7 is a schematic structural diagram of a first roller in a front view according to another embodiment of this application; and
FIG. 8 is a schematic diagram of a deformed structure of a first roller under the action of a pressurizing mechanism according to an embodiment of this application.

Reference signs in the specific embodiments are as follows:
100: rolling apparatus;
1: first roller;
10: rolling portion, 11: mounting hole, 12: heat conduction portion, 13: heat insulation portion, 14: inner cylinder portion, 15: outer cylinder portion;
21: first connecting portion, 22: second connecting portion;
30: temperature regulating assembly, 31: temperature regulator, 32: supporting piece;
40: conductive assembly, 41: first conductor, 42: second conductor, 43: first lead wire;
50: controller, 51: second lead wire;
60: air supply assembly;
2: second roller;
3: mounting seat;
4: pressurizing mechanism; and
200: electrode plate.

### DESCRIPTION OF EMBODIMENTS

The following describes in detail some embodiments of technical solutions in this application with reference to the accompanying drawings. The following embodiments are merely intended for a clearer description of the technical solutions in this application and therefore are used only as examples which do not constitute any limitations on the protection scope of this application.

It should be noted that unless otherwise specified, technical terms or scientific terms used in some embodiments of this application should have their usual meanings as understood by those skilled in the art to which embodiments of this application pertain.

In the description of some embodiments of this application, the orientations or positional relationships indicated by the technical terms "center", "longitudinal" "transverse", "length", "width", "thickness", "upper", "lower", "front", "rear", "left", "right", "perpendicular", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of the description of some embodiments of this application rather than indicating or implying that the apparatuses or components mentioned must have specific orientations, or must be constructed or manipulated according to specific orientations, and therefore shall not be construed as any limitations on an embodiment of this application.

In addition, the technical terms "first", "second", and the like are merely for the purpose of description, and shall not be understood as any indication or implication of relative importance or any implicit indication of the number of technical features indicated. In the description of this application, "a plurality of means at least two unless otherwise specifically stated.

In the descriptions of some embodiments of this application, unless otherwise specified and defined explicitly, the technical terms "mount", "link", "connect", and "fix" should be understood in their general senses. For example, they may refer to a fixed connection, a detachable connection, or an integrated connection; or may refer to a mechanical connection or an electrical connection; or may be a direct connection, or an indirect connection through an intermediate medium; or may be an internal connection between two components or an interactive relationship between two components. Persons of ordinary skill in the art can understand specific meanings of these terms in this application as appropriate to specific situations.

In the description of some embodiments of this application, unless otherwise specified and defined explicitly, a first feature is "above" or "below" a second feature may mean that the first and second features are in direct contact, or the first and second features are in indirect contact through an intermediate medium. Moreover, that the first feature is "above", "over", or "on" the second feature may mean that the first feature is directly above or obliquely above the second feature, or simply mean that the first feature has a higher level than the second feature. That the first feature is "below", "beneath", and "under" the second feature may mean that the first feature is directly below or obliquely below the second feature or simply mean that the first feature has a lower level than the second feature.

Currently, from a perspective of market development, application of traction batteries is being more extensive. Traction batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. As an important component of traction batteries, electrode plates determine the performance of traction batteries to some extent.

The inventors of this application have noticed that electrode plates need to be rolled by rolling equipment during production. During the rolling process of an electrode plate, a pressurizing mechanism applies extrusion pressure on both sides of a roller along an axial direction, and the electrode plate located in the middle of the roller provides a counter-acting force, which causes the roller to bend and deform in a radial direction. This leads to inconsistent radial dimensions at various positions on a rolling surface of the roller along the axial direction, causing inconsistent thickness of the rolled electrode plate, to be specific, thick in the middle but thin on two sides. As a result, the quality of the electrode plate is compromised, affecting the performance of traction batteries.

To solve the problem that the roller tends to bend and deform in the radial direction during the rolling process, the inventors of this application have found through research that a temperature regulating assembly is provided inside the roller to exchange heat with a rolling portion. When the rolling portion is rolling an electrode plate, the temperature regulating assembly regulates a temperature of the rolling portion along the axial direction, so as to adjust the radial deformation of the rolling portion depending on the rules of thermal expansion and contraction. This reduces the overall deformation of the rolling portion and ensures consistent thickness of the rolled electrode plate, thereby guaranteeing the performance of traction batteries produced using the electrode plate.

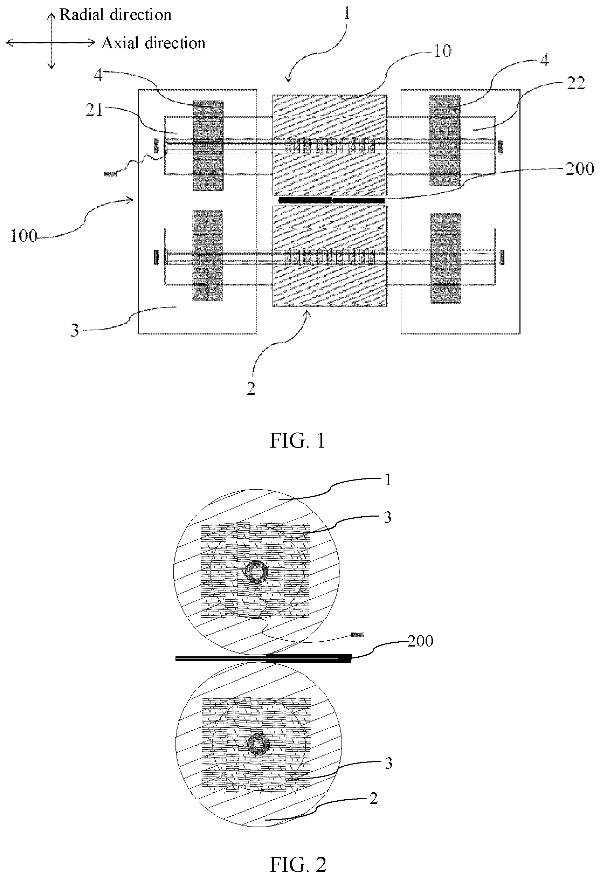

FIG. 1 is a schematic structural diagram of a rolling apparatus 100 in a front view according to an embodiment of this application. FIG. 2 is a schematic structural diagram of a rolling apparatus 100 in a side view according to an embodiment of this application. Referring to FIG. 1 and FIG. 2, the rolling apparatus 100 is configured to roll an electrode plate 200, and includes a first roller 1 and a second roller 2. The first roller 1 and the second roller 2 are arranged opposite each other and rotatably provided on a mounting seat 3. Two ends of the first roller 1 and two ends of the second roller 2 are each provided with a pressurizing mechanism 4. The electrode plate 200 to be rolled is placed between the first roller 1 and the second roller 2. Under the action of the pressurizing mechanisms 4, the first roller 1 and the second roller 2 approach each other and squeeze the electrode plate 200. In addition, the first roller 1 and the second roller 2 rotate around their own axes, to roll the electrode plate 200.

In some embodiments of this application, the first roller 1 and the second roller 2 may be of the same or different structures as long as they can jointly roll the electrode plate 200. For ease of description, only the first roller 1 is described as an example in this application.

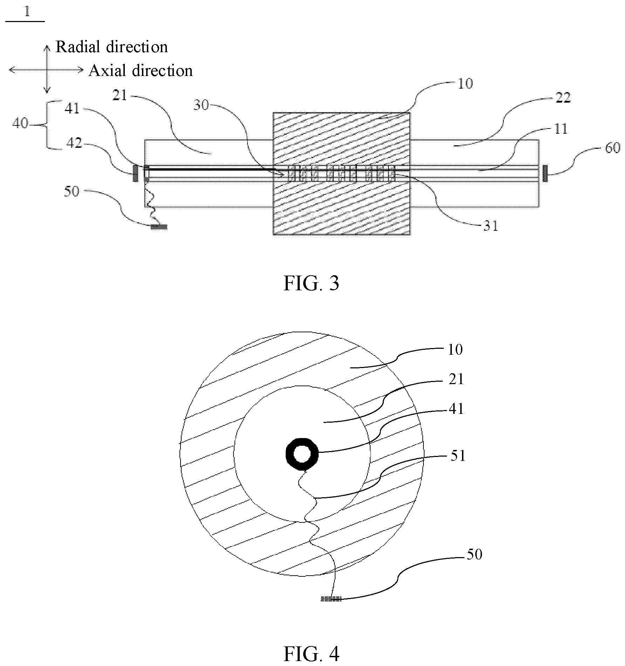

FIG. 3 is a schematic structural diagram of a first roller 1 in a front view according to an embodiment of this application. FIG. 4 is a schematic structural diagram of a first roller 1 in a side view according to an embodiment of this application. Referring to FIG. 1 to FIG. 4, in some embodiments of this application, the first roller 1 includes a rolling portion 10 and a temperature regulating assembly 30. A rolling surface for rolling the electrode plate 200 is formed on an outer surface of the rolling portion 10, and a mounting hole 11 is provided inside the rolling portion 10 along an axial direction of the rolling portion 10. The temperature regulating assembly 30 is provided in the mounting hole 11 and configured to exchange heat with the rolling portion 10.

Specifically, the rolling portion 10 refers to a portion in contact with the electrode plate 200 and used for rolling the electrode plate 200. A surface, of the rolling portion 10, in contact with the electrode plate 200 is the rolling surface. The temperature regulating assembly 30 can regulate its own temperature and exchange heat with the rolling portion 10 to regulate the temperature of the rolling portion 10. The heat exchange in this application includes contact heat exchange and contactless heat exchange. Contact heat exchange means that the temperature regulating assembly 30 is in contact with the rolling portion 10, so that heat of the temperature regulating assembly 30 is conducted to the rolling portion 10 to change the temperature of the rolling portion 10. Contactless heat exchange means that the temperature regulating assembly 30 and the rolling portion 10 are apart, and the temperature regulating assembly 30 changes the ambient temperature in the mounting hole 11, thereby regulating the temperature of the rolling portion 10.

In the first roller 1 according to this application, the temperature regulating assembly 30 is provided in the mounting hole 11 and configured to exchange heat with the rolling portion 10. When the rolling portion 10 is rolling an electrode plate 200, the temperature regulating assembly 30 regulates a temperature of the rolling portion 10 along the axial direction, so as to adjust the radial deformation of the rolling portion 10 depending on the rules of thermal expansion and contraction. This reduces the overall deformation of the rolling portion 10 and ensures consistent thickness of the rolled electrode plate 200, thereby guaranteeing the performance of traction batteries produced using the electrode plate 200.

Referring to FIG. 1 to FIG. 4, in some embodiments of this application, the temperature regulating assembly 30 includes a plurality of temperature regulators 31, where the plurality of temperature regulators 31 are spaced apart in the mounting hole 11 along the axial direction of the rolling portion 10 and are configured to independently exchange heat with the rolling portion 10.

Specifically, the plurality of temperature regulators 31 can independently exchange heat with the rolling portion 10, and the plurality of temperature regulators 31 are independently controlled. When the temperature of the rolling portion 10 needs to be regulated, the plurality of temperature regulators 31 can be all controlled to exchange heat with the rolling portion 10, or only one or several temperature regulators 31 are controlled to exchange heat with the rolling portion 10.

When radial deformation occurs in the rolling portion 10 pressing the electrode plate 200, the radial deformation dimension varies at different positions of the rolling surface along an axial direction. Therefore, a plurality of temperature regulators 31 are required for separate temperature regulation, so that the rolling portion 10 has different temperatures along the axial direction. In this case, the radial dimension is basically the same at different positions of the rolling surface along the axial direction, thereby ensuring consistent thickness of the rolled electrode plate 200.

Referring to FIG. 3 and FIG. 4, in some embodiments of this application, the temperature regulator 31 is a heat exchange semiconductor or a heat exchanger having a heat exchange medium.

Specifically, when energized, the heat exchange semiconductor can change a temperature of metal in contact with it. In some embodiments of this application, the temperature regulator 31 is a heat exchange semiconductor, and the rolling portion 10 is made of a metal conductive material. The heat exchange semiconductor 31 is fitted to an inner wall of the mounting hole 11. In this way, when energized, the heat exchange semiconductor exchanges heat with the rolling portion 10 to regulate the temperature of the rolling portion 10, thereby adjusting the radial deformation of the rolling portion 10.

In some embodiments of this application, the temperature regulator 31 is a heat exchanger having a heat exchange medium. The heat exchanger having a heat exchange medium may be fitted to an inner wall of the mounting hole 11 to directly conduct its own heat to the rolling portion 10, thereby regulating the temperature of the rolling portion 10. Alternatively, the heat exchanger having a heat exchange medium is isolated from an inner wall of the mounting hole 11 to regulate the temperature of the rolling portion 10 by changing a temperature in the mounting hole 11.

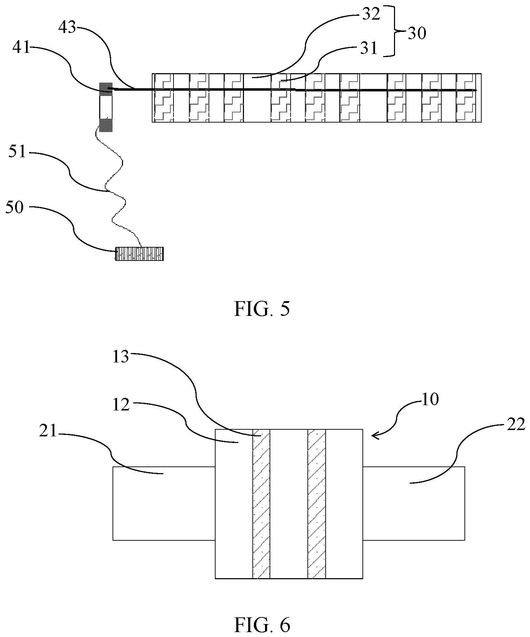

FIG. 5 is a schematic structural diagram of a connection between a temperature regulating assembly 30 and a conductive assembly 40 according to an embodiment of this application. Referring to FIG. 1 to FIG. 5, in some embodiments of this application, the temperature regulator 31 is a heat exchange semiconductor, and the roller 1 further includes a conductive assembly 40, where the conductive assembly 40 includes a first conductor 41 and a second conductor 42, the first conductor 41 is provided in the mounting hole 11 and is electrically connected to the heat exchange semiconductor, the second conductor 42 is provided outside the mounting hole 11 and is configured to be electrically connected to a power source (not shown in the figures), and the first conductor 41 and the second conductor 42 are capable of moving relative to each other and are electrically connected.

Specifically, one end of the first conductor 41 may be inserted into the mounting hole 11, and another end of the first conductor 41 may extend out of the mounting hole 11, and is electrically connected to the heat exchange semiconductor through a first lead wire 43. The second conductor 42 is electrically connected to a power source through a power cable, and may be fixed on a mounting seat 3 or another part of the rolling apparatus 100 except the roller. To prevent the power cable from damage due to winding, the second conductor 42 is not allowed to fixedly connect to the first conductor 41 for rotation along with the first conductor 41. Therefore, the first conductor 41 and the second conductor 42 need to be electrically connected and capable of moving relative to each other.

The first conductor 41 and the second conductor 42 are provided to connect an external power source and a heat exchange semiconductor, so as to supply power to the heat exchange semiconductor. In this way, the heat exchange semiconductor exchanges heat with the rolling portion 10 to regulate the temperature of the rolling portion 10, thereby adjusting the radial deformation of the rolling portion 10.

In some embodiments of this application, the temperature regulating assembly 30 further includes a supporting piece 32, allowing all the plurality of temperature regulators 31 to be mounted in the mounting hole 11 and ensuring a spacing between the plurality of temperature regulators 31. The supporting piece 32 may be a cylinder structure or a multi-rod structure. The plurality of temperature regulators 31 are fixed on the supporting piece 32, and the supporting piece 32 is inserted into the mounting hole 11, so that the plurality of temperature regulators 31 are provided in the mounting hole 11.

In some embodiments of this application, the first roller 1 further includes a controller 50. The controller 50 is connected to the temperature regulating assembly 30 through a second lead wire 51, so as to control on or off of the temperature regulating assembly 30. The controller 50 may be connected to the plurality of temperature regulators 31 collectively to control simultaneous on or off of the plurality of temperature regulators 31. Alternatively, the controller 50 may be connected to the plurality of temperature regulators 31 separately to control separate on or off of the plurality of temperature regulators 31.

Referring to FIG. 3 to FIG. 5, in some embodiments of this application, both the first conductor 41 and the second conductor 42 are graphite conductors, and the first conductor 41 and the second conductor 42 are in contact to conduct electricity.

Specifically, graphite has good electrical conductivity, and opposite end portions of the first conductor 41 and the second conductor 42 abut against each other. In this way, when power is supplied and the first conductor 41 rotates with the first roller 1, the first conductor 41 and the second conductor 42 move relative to each other and are electrically connected, thereby supplying power to the heat exchange semiconductor.

The graphite conductors are in contact to conduct electricity, so that electricity can be effectively conducted to the heat exchange semiconductor, thereby controlling the heat exchange semiconductor to exchange heat with the rolling portion 10. In this way, the temperature of the rolling portion 10 is regulated, thereby adjusting the radial deformation of the rolling portion 10.

Referring to FIG. 1 to FIG. 3, in some embodiments of this application, both the first conductor 41 and the second conductor 42 are magnetic induction coil conductors, and the first conductor 41 and the second conductor 42 are spaced apart and conduct electricity through induction.

Specifically, magnetic induction coils have good electrical conductivity through induction, and opposite end portions of the first conductor 41 and the second conductor 42 are spaced apart. In this way, when power is supplied and the first conductor 41 rotates with the first roller 1, the first conductor 41 and the second conductor 42 move relative to each other and conduct electricity through induction, thereby supplying power to the heat exchange semiconductor.

The magnetic induction coil conductors are provided to conduct electricity through induction, so that electricity can be effectively conducted to the heat exchange semiconductor, thereby controlling the heat exchange semiconductor to exchange heat with the rolling portion 10. In this way, the temperature of the rolling portion 10 is regulated, thereby adjusting the radial deformation of the rolling portion 10.

Referring to FIG. 3 to FIG. 5, in some embodiments of this application, the heat exchange semiconductor is a cooling semiconductor, or the heat exchange semiconductor is a heating semiconductor.

Specifically, in some embodiments of this application, the heat exchange semiconductor is a cooling semiconductor. The cooling semiconductor is fitted to the inner wall of the mounting hole 11, so as to regulate the temperature of the rolling portion 10 when powered on.

The cooling semiconductor is provided to contract, by cooling, the rolling portion 10 at various positions along the axial direction, so as to suppress the radial deformation of the rolling portion 10. In this way, the radial dimension is basically the same at various positions along the axial direction of the rolling portion 10.

Specifically, in some embodiments of this application, the heat exchange semiconductor is a heating semiconductor. The heating semiconductor is fitted to the inner wall of the mounting hole 11, so as to regulate the temperature of the rolling portion 10 when powered on.

The heating semiconductor is provided to expand, by heating, the rolling portion 10 at various positions along the axial direction, so as to balance the radial deformations at various positions along the axial direction of the rolling portion 10. In this way, the radial dimension is basically the same at various positions along the axial direction of the rolling portion 10.

Referring to FIG. 1 to FIG. 5, in some embodiments of this application, the heat exchange semiconductor is a cooling semiconductor, a plurality of such cooling semiconductors are symmetrically arranged with respect to a middle position along the axial direction of the rolling portion 10, and during operation, cooling powers of the cooling semiconductors gradually decrease in directions from two ends of the axial direction to the middle position of the rolling portion 10. Due to a counter-acting force of the electrode plate 200 applied to the first roller 1, it is easy to have a problem that the radial deformation dimension is large at a middle position and small at two end positions along the axial direction of the rolling portion 10. Therefore, operating powers of the cooling semiconductors at the two end positions are set to be higher than operating power of the cooling semiconductor at the middle position, so that contraction at the two end positions of the rolling portion 10 is greater than that at the middle position. In this way, the radial dimensions at various positions along the axial direction of the rolling portion 10 are adjusted to be basically consistent.

Referring to FIG. 1 to FIG. 5, in some embodiments of this application, the heat exchange semiconductor is a heating semiconductor, a plurality of such heating semiconductors are symmetrically arranged with respect to a middle position along the axial direction of the rolling portion 10, and during operation, heating powers of the heating semiconductors gradually increase in directions from two ends of the axial direction to the middle position of the rolling portion 10. Due to a counter-acting force of the electrode plate 200 applied to the first roller 1, it is easy to have a problem that the radial deformation dimension is large at a middle position and small at two end positions along the axial direction of the rolling portion 10. Therefore, operating powers of the heating semiconductors at the two end positions are set to be lower than operating power of the heating semiconductor at the middle position, so that expansion at the two end positions of the rolling portion 10 is smaller than that at the middle position. In this way, the radial dimensions at various positions along the axial direction of the rolling portion 10 are adjusted to be basically consistent.

Referring to FIG. 3 to FIG. 5, in some embodiments of this application, the mounting hole 11 is a through hole running through the roller in an axial direction, the through hole is coaxial with the first roller 10, and the first conductor 41 is provided at one end of the through hole facing the second conductor 42.

Specifically, the mounting hole 11 is coaxial with the first roller 10, so that the first conductor 41 mounted in the mounting hole 11 can be coaxial with the first roller 10. In this case, the first conductor 41 rotates around its own axis during the rotation process. This ensures that the position of the first conductor 41 remains unchanged during rotation, thereby ensuring that relative positions of the first conductor 41 and the second conductor 42 are fixed.

The first conductor 41 is provided in the mounting hole 11 and coaxial with the first roller 1. When the first roller 1 rotates to roll an electrode plate 200, the first conductor 41 rotates along with the roller 1 in the axial direction. This maintains a rotational position of the first conductor 41, ensuring that the first conductor 41 and the second conductor 42 keep in contact to conduct electricity at all times.

Referring to FIG. 1 to FIG. 5, in some embodiments of this application, the first roller further includes an air supply assembly 60, where the air supply assembly 60 is provided outside the other end of the mounting hole 11 far away from the second conductor 42 and is configured to deliver cooling airflow into the mounting hole 11.

Specifically, the air supply assembly 60 may be a fan. The air supply assembly 60 and the first conductor 41 are respectively arranged at two ends of the mounting hole 11 along the axial direction. The air supply assembly 60 may be fixed on the mounting seat 3 or another part of the rolling apparatus 100 except the roller. This avoids the air supply assembly 60 from rotating along with the roller, ensuring proper air supply of the air supply assembly 60.

A certain amount of heat will be released during heat exchange between the heat exchange semiconductor and the rolling portion 10. To prevent the released heat from affecting the heat exchange or damaging the first lead wire 43 between the heat exchange semiconductor and the first conductor 41, the air supply assembly 60 is provided to deliver airflow for dissipating heat from the mounting hole 11.

Referring to FIG. 3 to FIG. 5, in some embodiments of this application, the temperature regulator 31 is a heat exchanger having a heat exchange medium, and the first roller 1 further includes a heat exchange tube (not shown in the figures), where a passage for circulation of the heat exchange medium is formed inside the heat exchange tube, and the passage communicates with the interior of the heat exchanger.

Specifically, a temperature of the heat exchange medium will change during heat exchange. To ensure an adequate temperature of the heat exchange medium, a heat exchange tube is required for circulation and replacement of the heat exchange medium.

The heat exchange tube communicates with the heat exchanger, so that the heat exchange medium in the heat exchanger is replaced. This ensures that the temperature of the heat exchange medium in the heat exchanger is adequate for heat exchange with the rolling portion 10, thereby regulating the temperature of the rolling portion 10.

Referring to FIG. 3 to FIG. 5, in some embodiments of this application, one end of the heat exchange tube is provided outside the mounting hole 11, the other end of the heat exchange tube is inserted into the mounting hole 11 and communicates with the heat exchanger, and the heat exchanger is isolated from an inner wall of the mounting hole 11 under the support of the heat exchange tube.

Specifically, the heat exchange tube is configured to transport an external heat exchange medium to the heat exchanger. Therefore, an effective connection between the heat exchange tube and an external heat exchange medium feeder needs to be ensured, and the heat exchange tube cannot rotate along with the first roller 1. The heat exchange tube adopts a tubular structure with certain rigidity for supporting the heat exchanger. The heat exchanger is isolated from an inner wall of the mounting hole 11 under the support of the heat exchange tube, so that the heat exchange tube is suspended in the mounting hole 11. During rotation of the rolling portion 10, the heat exchange tube will not rotate along with the rolling portion 10, thereby ensuring an effective connection between the heat exchanger and the heat exchange tube. In this way, the heat exchange medium in the heat exchanger can be replaced through the heat exchange tube.

Still referring to FIG. 3 to FIG. 5, in some embodiments of this application, the heat exchanger is a cooling piece having a cooling medium, or the heat exchanger is a heating piece having a heating medium.

In some embodiments of this application, the heat exchanger is a cooling piece having a cooling medium, which may specifically use a cooling method such as air cooling, water cooling, or liquid nitrogen cooling.

The cooling piece having a cooling medium is provided to contract, by cooling, the rolling portion 10 at various positions along the axial direction, so as to suppress the radial deformation of the rolling portion 10. In this way, the radial dimension is basically the same at various positions along the axial direction of the rolling portion 10. The radial deformation at the middle position is greater than that at two ends along the axial direction of the rolling portion 10. Therefore, a degree of suppression of the cooling piece at the middle position should be higher than that at the two ends along the axial direction of the rolling portion 10.

In some embodiments of this application, the heat exchanger is a heating piece having a heating medium, which may specifically use a heating method such as air heating, water heating, or oil heating.

The heating piece having a heating medium is provided to expand, by heating, the rolling portion 10 at various positions along the axial direction, so as to balance the radial deformations at various positions along the axial direction of the rolling portion 10. In this way, the radial dimension is basically the same at various positions along the axial direction of the rolling portion 10. The radial deformation at the middle position is greater than that at two ends along the axial direction of the rolling portion 10. Therefore, a degree of suppression of the heating piece at the middle position should be lower than that at the two ends along the axial direction of the rolling portion 10.

Referring to FIG. 1 to FIG. 5, in some embodiments of this application, the heat exchanger is a cooling piece having a cooling medium, a plurality of such cooling pieces are symmetrically arranged with respect to a middle position along the axial direction of the rolling portion 10, and during operation, cooling powers of the cooling pieces gradually decrease in directions from two ends of the axial direction to the middle position of the rolling portion 10. Due to a counter-acting force of the electrode plate 200 applied to the first roller 1, it is easy to have a problem that the radial deformation dimension is large at a middle position and small at two end positions along the axial direction of the rolling portion 10. Therefore, operating powers of the cooling pieces at the two end positions are set to be higher than operating power of the cooling piece at the middle position, so that contraction at the two end positions of the rolling portion 10 is greater than that at the middle position. In this way, the radial dimensions at various positions along the axial direction of the rolling portion 10 are adjusted to be basically consistent.

Referring to FIG. 1 to FIG. 5, in some embodiments of this application, the heat exchanger is a heating piece having a heating medium, a plurality of such heating pieces are symmetrically arranged with respect to a middle position along the axial direction of the rolling portion 10, and during operation, heating powers of the heating pieces gradually increase in directions from two ends of the axial direction to the middle position of the rolling portion 10. Due to a counter-acting force of the electrode plate 200 applied to the first roller 1, it is easy to have a problem that the radial deformation dimension is large at a middle position and small at two end positions along the axial direction of the rolling portion 10. Therefore, operating powers of the heating pieces at the two end positions are set to be lower than operating power of the heating piece at the middle position, so that expansion at the two end positions of the rolling portion 10 is smaller than that at the middle position. In this way, the radial dimensions at various positions along the axial direction of the rolling portion 10 are adjusted to be basically consistent.

FIG. 6 is a schematic structural diagram of a first roller 1 in a front view according to another embodiment of this application. Referring to FIG. 1 to FIG. 6, in some embodiments of this application, the rolling portion 10 includes a plurality of heat conduction portions 12 and a plurality of heat insulation portions 13 alternately arranged in sequence along the axial direction, where the heat conduction portion 12 is fitted and connected to the heat insulation portion 13, and the plurality of temperature regulators 31 are arranged in a one-to-one correspondence with the plurality of heat conduction portions 12.

Specifically, the heat conduction portion 12 is a ring structure, through which a mounting hole 11 runs along an axial direction. The heat conduction portion 12 may be made of a heat conductive metal and is arranged corresponding to the temperature regulator 31, so that the temperature of a single heat conduction portion 12 can be controlled by controlling the temperature regulator 31. The heat insulation portion 13 is a ring structure, through which a mounting hole 11 runs along an axial direction. The heat insulation portion 13 is configured to isolate two adjacent heat conduction portions 12, so as to implement multi-section independent temperature control on the rolling portion 10 along the axial direction. The heat insulation portion 13 may be made of a nonmetallic or inorganic material such as ceramic, plastic, or aerogel.

The plurality of heat conduction portions 12 and the plurality of heat insulation portions 13 are alternately arranged in sequence to divide the rolling portion 10 into sections along the axial direction and no heat is exchanged between the sections, so as to regulate the temperature of each section. In this way, the rolling portion 10 has different temperatures along the axial direction, and the radial dimension is basically the same at different positions along the axial direction of the rolling surface, thereby ensuring consistent thickness of the rolled electrode plate 200.

Referring to FIG. 1 to FIG. 6, in some embodiments of this application, outer surfaces of the plurality of heat conduction portions 12 and outer surfaces of the plurality of heat insulation portions 13 jointly form a rolling surface for rolling the electrode plate 200, and the rolling surface is cylindrical in a natural state. The cylindrical rolling surface can ensure consistent thickness of the rolled electrode plate 200.

Referring to FIG. 3 to FIG. 6, in some embodiments of this application, the first roller 1 further includes a first connecting portion 21 and a second connecting portion 22, where the first connecting portion 21 and the second connecting portion 22 are connected to two ends of the rolling portion 10 respectively in the axial direction.

Specifically, the rolling portion 10 is a stand-alone integrated structure, and the first connecting portion 21 and the second connecting portion 22 are connected to two ends of the rolling portion 10 respectively in the axial direction. A specific connection mode may be welding or clamping, so as to support rotation of the rolling portion 10 for rolling electrode plates 200. A mounting hole 11 is provided to run through a central position of the rolling portion 10 along the axial direction, and the temperature regulating assembly 30 in the mounting hole 11 can directly regulate the temperature of the rolling portion 10.

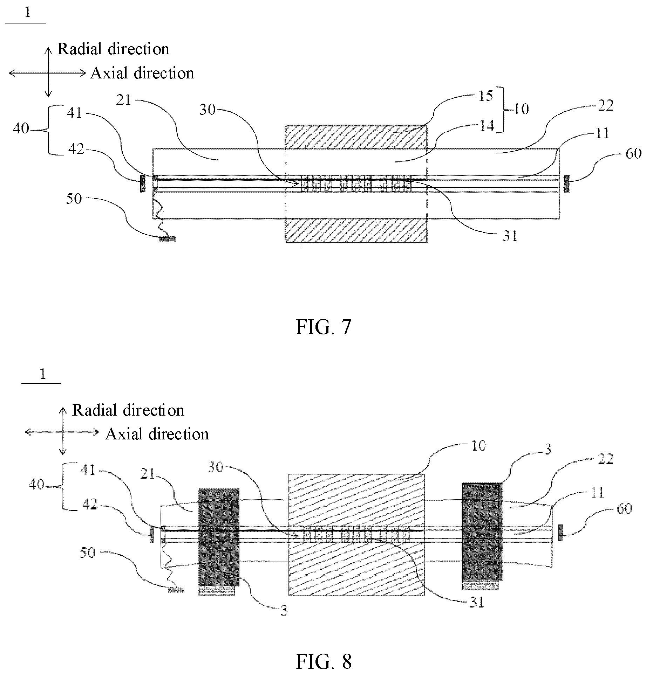

FIG. 7 is a schematic structural diagram of a first roller 1 in a front view according to another embodiment of this application. Referring to FIG. 3, FIG. 4, FIG. 5 and FIG. 7, in some embodiments of this application, the first roller 1 further includes a first connecting portion 21 and a second connecting portion 22, and the rolling portion 10 includes an inner cylinder portion 14 and an outer cylinder portion 15, where the inner cylinder portion 14, the first connecting portion 21, and the second connecting portion 22 are integrally formed into a roller shaft, the outer cylinder portion 15 is sleeved outside the inner cylinder portion 14, and the mounting hole 11 is provided inside the inner cylinder portion 14 along an axial direction of the inner cylinder portion.

Specifically, the inner cylinder portion 14, the first connecting portion 21, and the second connecting portion 22 are integrally formed into a roller shaft, a through hole is provided to run through a central position of the outer cylinder portion 15, the roller shaft is arranged in the through hole, and the outer cylinder portion 15 is sleeved outside the inner cylinder portion 14. This facilitates the assembly of the first roller 1. A mounting hole 11 is provided to run through a central position of the first roller shaft 1, and the mounting hole 11 runs through the first connecting portion 21, the inner cylinder portion 14, and the second connecting portion 22 in sequence. The temperature regulating assembly 30 in the mounting hole 11 regulates the temperature of the inner cylinder portion 14, and then the inner cylinder portion 14 regulates the temperature of the outer cylinder portion 15, thereby adjusting the radial dimensions at various positions of the rolling portion 10 along the axial direction.

Referring to FIG. 1 to FIG. 7, the second aspect of this application proposes a rolling apparatus 100. The rolling apparatus 100 has a first roller 1 and a second roller 2, where the first roller 1 and the second roller 2 are jointly configured to roll an electrode plate 200, and the first roller 1 is the first roller 1 according to any one of the foregoing embodiments.

Specifically, in some embodiments of this application, the second roller 2 and the first roller 1 have a same structure, and are each provided with a temperature regulating assembly 30 for adjusting the radial dimensions at various positions of the second roller 2 along an axial direction.

FIG. 8 is a schematic diagram of a deformed structure of a first roller 1 under the action of a pressurizing mechanism 4 according to an embodiment of this application. As shown in FIG. 1, FIG. 3 and FIG. 8, in this application, the temperature regulating assembly 30 is provided inside the first roller 1. Under the action of the pressurizing mechanism 4 and the temperature regulating assembly 30, a rolling surface of the first roller 1 for rolling an electrode plate 200 remains cylindrical. This ensures consistent thickness of the electrode plate 200 at the position of rolling, thereby ensuring the performance of batteries.

The foregoing description is merely an overview of the technical solution of this application. For a better understanding of the technical means in this application such that they can be implemented according to the content of the specification, and to make the above and other objectives, features and advantages of this application more obvious and easier to understand, the following describes specific embodiments of this application.

Referring to FIG. 1 to FIG. 6, in some embodiments of this application, the rolling apparatus 100 includes a first roller 1 and a second roller 2 arranged opposite each other, and the first roller 1 and the second roller 2 are jointly configured to roll an electrode plate 200, where the second roller 2 and the first roller 1 have a same structure and are arranged on two sides of the electrode plate 200. Specifically, the first roller 1 includes a rolling portion 10, a first connecting portion 21, a second connecting portion 22, and a temperature regulating assembly 30, where the first connecting portion 21 and the second connecting portion 22 are connected to two ends of the rolling portion 10 respectively in an axial direction. A rolling surface for rolling the electrode plate 200 is formed on an outer surface of the rolling portion 10, and a mounting hole 11 is provided inside the rolling portion 10 along the axial direction of the rolling portion 10. The temperature regulating assembly 30 is provided in the mounting hole 11 and is capable of exchanging heat with the rolling portion 10. The temperature regulating assembly 30 includes a plurality of temperature regulators 31, where the plurality of temperature regulators 31 are spaced apart in the mounting hole 11 along the axial direction of the rolling portion 10 and are configured to independently exchange heat with the rolling portion 10. The rolling portion 10 includes a plurality of heat conduction portions 12 and a plurality of heat insulation portions 13 alternately arranged in sequence along the axial direction, where the heat conduction portion 12 is fitted and connected to the heat insulation portions 13, and the plurality of temperature regulators 31 are arranged in a one-to-one correspondence with the plurality of heat conduction portions 12. Outer surfaces of the plurality of heat conduction portions 12 and outer surfaces of the plurality of heat insulation portions 13 jointly form a rolling surface for rolling the electrode plate 200, and the rolling surface is cylindrical in a natural state. The temperature regulator 31 is a heat exchange semiconductor, specifically a cooling semiconductor. A plurality of cooling semiconductors are arranged at two sides of the middle position of the rolling portion 10 along the axial direction, and operating powers of the cooling semiconductors at two end positions of the axial direction are higher than operating power of the cooling semiconductor at the middle position of the axial direction. The first roller 1 further includes a conductive assembly 40, where the conductive assembly 40 includes a first conductor 41 and a second conductor 42, the first conductor 41 is provided in the mounting hole 11 and is electrically connected to the heat exchange semiconductor, the second conductor 42 is provided outside the mounting hole 11 and is configured to be electrically connected to a power source, and the first conductor 41 and the second conductor 42 are capable of moving relative to each other and are electrically connected. Both the first conductor 41 and the second conductor 42 are graphite conductors, and the first conductor 41 and the second conductor 42 are in contact to conduct electricity. The mounting hole 11 is a through hole running through the first roller 1 in an axial direction, the through hole is coaxial with the first roller 1, and the first conductor 41 is provided at one end of the through hole facing the second conductor 42. The first roller further includes an air supply assembly 60, where the air supply assembly 60 is provided outside the other end of the mounting hole 11 far away from the second conductor 42 and is configured to deliver cooling airflow into the mounting hole 11.

In conclusion, it should be noted that the foregoing embodiments are for description of the technical solutions of this application only rather than for limiting this application. Although this application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of this application. All such modifications and equivalent replacements shall fall within the scope of claims and specification of this application. In particular, as long as there is no structural conflict, the various technical features mentioned in the implementations can be combined in any manners. This application is not limited to the specific implementations disclosed in this specification, but includes all technical solutions falling within the scope of the claims.

## Claims

1. A roller configured to roll an electrode plate, **characterized by** comprising:
a rolling portion, wherein a rolling surface for rolling an electrode plate is formed on an outer surface of the rolling portion, and a mounting hole is provided inside the rolling portion along an axial direction of the rolling portion; and
a temperature regulating assembly, wherein the temperature regulating assembly is provided in the mounting hole and configured to exchange heat with the rolling portion.

2. The roller according to claim 1, **characterized in that** the temperature regulating assembly comprises a plurality of temperature regulators, wherein the plurality of temperature regulators are spaced apart in the mounting hole along the axial direction of the rolling portion and are configured to independently exchange heat with the rolling portion.

3. The roller according to claim 2, **characterized in that** the temperature regulator is a heat exchange semiconductor or a heat exchanger having a heat exchange medium.

4. The roller according to claim 2 or 3, **characterized in that** the temperature regulator is a heat exchange semiconductor, and the roller further comprises a conductive assembly, wherein the conductive assembly comprises a first conductor and a second conductor, the first conductor is provided in the mounting hole and is electrically connected to the heat exchange semiconductor, the second conductor is provided outside the mounting hole and is configured to be electrically connected to a power source, and the first conductor and the second conductor are capable of moving relative to each other and are electrically connected.

5. The roller according to claim 4, **characterized in that** both the first conductor and the second conductor are graphite conductors, and the first conductor and the second conductor are in contact to conduct electricity.

6. The roller according to claim 4, **characterized in that** both the first conductor and the second conductor are magnetic induction coil conductors, and the first conductor and the second conductor are spaced apart and conduct electricity through induction.

7. The roller according to claim 4, **characterized in that** the heat exchange semiconductor is a cooling semiconductor, or the heat exchange semiconductor is a heating semiconductor.

8. The roller according to claim 4 or 7, **characterized in that** the heat exchange semiconductor is a cooling semiconductor, a plurality of such cooling semiconductors are symmetrically arranged with respect to a middle position along the axial direction of the rolling portion, and during operation, cooling powers of the cooling semiconductors gradually decrease in directions from two ends of the axial direction to the middle position of the rolling portion.

9. The roller according to claim 4 or 7, **characterized in that** the heat exchange semiconductor is a heating semiconductor, a plurality of such heating semiconductors are symmetrically arranged with respect to a middle position along the axial direction of the rolling portion, and during operation, heating powers of the heating semiconductors gradually increase in directions from two ends of the axial direction to the middle position of the rolling portion.

10. The roller according to claim 4, **characterized in that** the mounting hole is a through hole running through the roller in an axial direction, the through hole is coaxial with the roller, and the first conductor is provided at one end of the through hole facing the second conductor.

11. The roller according to claim 10, **characterized in that** the roller further comprises an air supply assembly, wherein the air supply assembly is provided outside the other end of the mounting hole far away from the second conductor and is configured to deliver cooling airflow into the mounting hole.

12. The roller according to claim 3, **characterized in that** the temperature regulator is a heat exchanger having a heat exchange medium, and the roller further comprises a heat exchange tube, wherein a passage for circulation of the heat exchange medium is formed inside the heat exchange tube, and the passage communicates with the interior of the heat exchanger.

13. The roller according to claim 12, **characterized in that** one end of the heat exchange tube is provided outside the mounting hole, the other end of the heat exchange tube is inserted into the mounting hole and communicates with the heat exchanger, and the heat exchanger is isolated from an inner wall of the mounting hole under the support of the heat exchange tube.

14. The roller according to claim 12, **characterized in that** the heat exchanger is a cooling piece having a cooling medium, or the heat exchanger is a heating piece having a heating medium.

15. The roller according to claim 12 or 14, **characterized in that** the heat exchanger is a cooling piece having a cooling medium, a plurality of such cooling pieces are symmetrically arranged with respect to a middle position along the axial direction of the rolling portion, and during operation, cooling powers of the cooling pieces gradually decrease in directions from two ends of the axial direction to the middle position of the rolling portion.

16. The roller according to claim 12 or 14, **characterized in that** the heat exchanger is a heating piece having a heating medium, a plurality of such heating pieces are symmetrically arranged with respect to a middle position along the axial direction of the rolling portion, and during operation, heating powers of the heating pieces gradually increase in directions from two ends of the axial direction to the middle position of the rolling portion.

17. The roller according to claim 2, **characterized in that** the rolling portion comprises a plurality of heat conduction portions and a plurality of heat insulation portions alternately arranged in sequence along the axial direction, wherein the heat conduction portion is fitted and connected to the heat insulation portions, and the plurality of temperature regulators are arranged in a one-to-one correspondence with the plurality of heat conduction portions.

18. The roller according to claim 17, **characterized in that** outer surfaces of the plurality of heat conduction portions and outer surfaces of the plurality of heat insulation portions jointly form a rolling surface for rolling the electrode plate, and the rolling surface is cylindrical in a natural state.

19. The roller according to any one of claims 1 to 18, **characterized in that** the roller further comprises a first connecting portion and a second connecting portion, wherein the first connecting portion and the second connecting portion are connected to two ends of the rolling portion respectively in the axial direction.

20. The roller according to any one of claims 1 to 18, **characterized in that** the roller further comprises a first connecting portion and a second connecting portion, and the rolling portion comprises an inner cylinder portion and an outer cylinder portion, wherein the inner cylinder portion, the first connecting portion, and the second connecting portion are integrally formed into a roller shaft, the outer cylinder portion is sleeved outside the inner cylinder portion, and the mounting hole is provided inside the inner cylinder portion along an axial direction of the inner cylinder portion.

21. A rolling apparatus **characterized by** comprising a first roller and a second roller, wherein the first roller and the second roller are jointly configured to roll an electrode plate, and at least one of the first roller and the second roller is the roller according to any one of claims 1 to 20.
